# EUROPÄISCHE PATENTSCHRIFT

(11) **EP 2 661 023 B1**
(45) Veröffentlichungstag und Bekanntmachung des Hinweises auf die Patenterteilung: **14.01.2015**
(21) Anmeldenummer: 12166109.4
(22) Anmeldetag: 30.04.2012
(51) Int. Cl.: H04L 12/823, H04L 12/939, H04B 1/74

(54) **Kommunikationsgerät für ein redundant betreibbares industrielles Kommunikationsnetz und Verfahren zum Betrieb eines Kommunikationsgeräts**
Communication device for a redundant industrial communication network and method for operating a communication device
Appareil de communication pour un réseau de communication industriel fonctionnant de manière redondante et procédé de fonctionnement d'un appareil de communication

(43) Veröffentlichungstag der Anmeldung: 06.11.2013
(73) Patentinhaber: Siemens Aktiengesellschaft, 80333 München (DE)
(72) Erfinder: Angst, Hermann, 76199 Karlsruhe (DE); Götz, Franz-Josef, 91180 Heideck (DE); Kasper, Michael, 90411 Nürnberg (DE); Lohmeyer, Joachim, 91161 Hilpoltstein (DE)

(56) Entgegenhaltungen:
- EP-A2- 1 052 872
- US-B1- 6 400 718

## Beschreibung

In verteilten industriellen Automatisierungssystemen ist bei einer Erfassung, Auswertung und Übermittlung von Meß- und Steuerungsdaten ist sicherzustellen, daß vollständige und unveränderte Daten insbesondere bei zeitkritischen industriellen Produktionsprozessen in Echtzeit vorliegen. Absichtliche, unabsichtliche oder durch einen technischen Fehler bedingte Veränderungen sind zu vermeiden, da dies innerhalb eines industriellen Automatisierungssystems zu inkonsistenten Systemzuständen und Systemausfällen mit wirtschaftlich gravierenden Stillstandszeiten führen kann.

Ein industrielles Automatisierungssystem umfaßt üblicherweise eine Vielzahl von über ein industrielles Kommunikationsnetz miteinander vernetzten Automatisierungsgeräten und dient im Rahmen einer Fertigungs- oder Prozeßautomatisierung zur Steuerung oder Regelung von Anlagen, Maschinen bzw. Geräten. Aufgrund zeitkritischer Rahmenbedingungen in mittels industrieller Automatisierungssysteme automatisierten technischen Systemen werden in industriellen Kommunikationsnetzen zur Kommunikation zwischen Automatisierungsgeräten überwiegend Echzeit-Kommunikationsprotokolle, wie Profinet, Profibus oder Real-Time-Ethernet, verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie Media Redundancy Protocol, High-availability Seamless Redundancy oder Parallel Redundancy Protocol, für hochverfügbare, redundant betreibbare in industriellen Kommunikationsnetze entwickelt worden. Media Redundancy Protocol (MSR) ist im Standard IEC 62439 definiert und ermöglicht eine Kompensation einzelner Verbindungsausfälle in Netzwerken mit einfacher Ringtopologie bei stoßbehafteter redundanter Übertragung von Datenpaketen. Entsprechend Media Redundancy Protocol ist einem Switch mit zwei Ports innerhalb der Ringtopologie ein Redundanz-Manager zugeordnet, der das Netzwerk auf Verbindungsausfälle überwacht und ggf. eine Schaltmaßnahme für einen Ringschluß einleitet. In normalen Betriebszustand prüft der Redundanz-Manager anhand von Test-Datenpaketen, ob innerhalb der Ringtopologie eine Unterbrechung aufgetreten ist. Datenpakete mit Nutzdaten leitet der dem Redundanz-Manager zugeordnet Switch normalerweise jedoch nicht von einem Port an den anderen Port weiter. Somit wird verhindert, daß Datenpakete mit Nutzdaten permanent innerhalb der Ringtopologie zirkulieren. Fällt innerhalb der Ringtopologie ein Switch oder eine Verbindung aus, werden von einem Port ausgesendeten Test-Datenpakete nicht mehr am jeweils anderen Port empfangen. Anhand dessen kann der Redundanz-Manager einen Ausfall erkennen und leitet bei einem Ausfall Datenpakete mit Nutzdaten im Unterschied zum normalen Betriebszustand von einem Port an den anderen Port und umgekehrt weiter. Darüber hinaus veranlaßt der Redundanz-Manager eine Benachrichtigung der übrigen Switches über eine Ausfall-bedingte Topologieänderung. Auf diese Weise wird vermieden, daß Datenpakete über die ausgefallene Verbindung übermittelt werden.

Stoßbehaftete Medienredundanzverfahren lassen sich grundsätzlich mit relativ geringem Aufwand realisieren. Nachteilig ist jedoch, daß einerseits Nachrichten im Fehlerfall verloren gehen können und andererseits während einer Rekonfiguration eines Kommunikationsnetzes zunächst ein Störungszustand vorliegt. Ein derartiger Störungszustand muß durch ein überlagertes Kommunikationsprotokoll, beispielsweise mittels TCP/IP auf Vermittlungs- bzw. Transportschichtebene, gesichert werden, um eine Unterbrechung einer Kommunikationsverbindung zu vermeiden.

Auch PROFINET (IEC 61158 Type 10) referenziert Media Redundancy Protocol als stoßbehaftetes Medienredundanzverfahren innerhalb eines Kommunikationsnetzes mit Ringtopologie. Media Redundancy Planned Duplication (MRPD) stellt demgegenüber eine Erweiterung für eine stoßfreie Übertragung von isochronen Echtzeitdaten. Bei Media Redundancy Planned Duplication handelt es sich jedoch nicht um ein anwendungsneutrales stoßfreies Medienredundanzverfahren, sondern um eine PROFINETspezifische Erweiterung.

High-availability Seamless Redundancy (HSR) und Parallel Redundancy Protocol (PRP) sind im Standard IEC 62439-3 definiert und ermöglichen eine stoßfreie redundante Übertragung von Datenpaketen mit äußerst geringen Erholungszeiten. Entsprechend High-availability Seamless Redundancy und Parallel Redundancy Protocol wird jedes Datenpaket von einer sendenden Kommunikationsgerät dupliziert und auf zwei verschiedenen Wegen zu einem Empfänger geschickt. Durch ein empfängerseitiges Kommunikationsgerät werden Duplikate darstellende redundante Datenpakete aus einem empfangenen Datenstrom ausgefiltert.

In DE 10 2008 017 192 A1 ist ein Verfahren zum Aufbau eines Netzwerks beschrieben, das einen ersten Netzwerkteilnehmer mit einem Satz von Ports umfaßt. Diese Ports sind mit Ports von weiteren Netzwerkteilnehmern des Netzwerks verbunden. In einem ersten Verfahrensschritt werden die dem ersten Netzwerkteilnehmer zugeordneten Ports in einen ersten Betriebsmodus geschaltet. Im ersten Betriebsmodus können über die Ports Testtelegramme empfangen und versendet werden. Entsprechend einem weiteren Verfahrensschritt werden Testtelegramme über die dem ersten Netzwerkteilnehmer zugeordneten Ports gesendet. Darüber hinaus werden die dem ersten Netzwerkteilnehmer zugeordneten Ports in einen zweiten Betriebsmodus geschaltet, falls kein Testtelegramm der gesendeten Testtelegramme wieder vom ersten Netzwerkteilnehmer empfangen wird. Im zweiten Betriebsmodus werden Telegramme, die über einen der dem ersten Netzwerkteilnehmer zugeordneten Ports empfangen werden, über die verbleibenden Ports weitergeleitet. Auf diese Weise kann eine Bildung von Netzwerkschlaufen bei einem Vernetzen oder Erweitern komplexer Netzwerke vermieden werden.

Aus EP 2 282 452 A1 ist ein Verfahren zur Datenübermittlung innerhalb eines ringartigen Kommunikationsnetzes beschrieben, bei dem die Datenübermittlung entsprechend High-availability Seamless Redundancy erfolgt und das Kommunikationsnetz zumindest einen Master-Knoten, einen Quellknoten und einen Zielknoten umfaßt. Jeder Knoten weist eine erste und eine zweite Kommunikationsschnittstelle mit einem jeweiligen ersten und zweiten Nachbarknoten auf. Darüber hinaus empfängt jeder Knoten Datenrahmen über die erste Kommunikationsschnittstelle und leitet den empfangenen Datenrahmen entweder verändert oder unverändert über die zweite Kommunikationsschnittstelle ohne zusätzliche Verzögerung weiter. Der Master-Knoten sendet einen ersten und zweiten redundanten Datenrahmen oder ein leeres Datenpaket an seinen ersten bzw. zweiten Nachbarknoten. Bei Empfang der beiden redundanten Datenrahmen befüllt der Quellknoten den jeweiligen Datenrahmen in einem vorbestimmten reservierten Bereich mit Prozeßdaten. Anschließend wird jeder befüllte Datenrahmen umgehend und individuell an den ersten bzw. zweiten Nachbarknoten des Quellknotens weitergeleitet. Der Zielknoten extrahiert schließlich die Prozeßdaten aus dem ersten empfangenen befüllten Datenrahmen eines Paars von redundanten Datenrahmen.

In EP 2 343 857 A1 ist ein Netzwerkknoten für ein Kommunikationsnetzwerk beschrieben, das ein erstes Teilnetz und ein mit dem ersten Teilnetz verbundenes zweites Teilnetz umfaßt. Während im ersten Teilnetz eine Datenübertragung entsprechend einem Spannbaum-Protokoll erfolgt, wird zur Datenübertragung im zweiten Teilnetz ein sich vom im ersten Teilnetz verwendeten Protokoll unterscheidendes zweites Protokoll verwendet. Der in EP 2 343 857 A1 beschriebene Netzwerkknoten wird als ein Element für das zweite Teilnetz und zur Kommunikation innerhalb des zweiten Teilnetzes eingerichtet. Darüber hinaus wird der Netzwerkknoten mittels einer Spannbaum-Funktionalität als ein Spannbaum-Hauptknoten zur Kontrolle und Steuerung des zweiten Teilnetzes eingerichtet. Dadurch ist das zweite Teilnetz durch das im ersten Teilnetz verwendete Spannbaum-Protokoll als virtueller Netzknoten behandelbar.

Aus EP 2 413 538 A1 ist ein Verfahren zur redundanten Kommunikation in einem Kommunikationssystem bekannt, das mehrere Kommunikationsnetzwerke umfaßt. Die Kommunikationsnetzwerke sind über zumindest einen Kopplungsknoten miteinander verbunden. Eine Rückübertragung von Daten, die aus einem ersten Kommunikationsnetzwerk stammen, aus einem zweiten Kommunikationsnetzwerk zurück in das erste Kommunikationsnetzwerk wird auf Grund einer vor Datenübertragung definierten Information verhindert.

**In** US 400 718 B1 **ist ein Verfahren zur redundanten Datenübermittlung beschrieben, bei dem eine aktive ATD-Datenverbindung (asynchronous transfer mode) stoßfrei, d.h. im wesentlichen ohne Unterbrechung während einer Rekonfigurationszeit, auf eine Reserve- bzw. Standby-ATM-Datenverbindung umgeschaltet wird. Während eines Umschaltvorgangs wird die Datenübertragungsrate (available bit rate) mittels Switchinterner Pufferspeicher aufrechterhalten.**

Der vorliegenden Erfindung liegt die Aufgabe zugrunde, ein Kommunikationsgerät für ein redundant betreibbares industrielles Kommunikationsnetz, das einerseits eine Vermeidung von Verbindungsabbrüchen bei zeitkritischen Anwendungen und andererseits eine aufwandsreduzierte Redundanzbehandlung bei zeitunkritischen Anwendungen ermöglicht, und ein Verfahren zum Betrieb eines solchen Kommunikationsgeräts anzugeben.

Diese Aufgabe wird erfindungsgemäß durch ein Kommunikationsgerät mit den in Anspruch 1 angegebenen Merkmalen und durch ein Verfahren mit den in Anspruch **11** angegebenen Merkmalen gelöst. Vorteilhafte Weiterbildungen der vorliegenden Erfindung sind in den abhängigen Ansprüchen angegeben.

Das erfindungsgemäße Kommunikationsgerät für ein redundant betreibbares industrielles Kommunikationsnetz umfaßt zumindest eine erste und eine zweite Sende- und Empfangseinheit, die jeweils eine Schnittstelle für eine Netzwerkverbindung des industriellen Kommunikationsnetzes aufweisen. Beide Sende- und Empfangseinheiten weisen eine identische Netzwerkadresse und einen identischen Geräteidentifikator auf. Mit der ersten und zweiten Sende- und Empfangseinheit ist eine Signalverarbeitungseinheit für eine stoßfreie Datenübermittlung innerhalb des industriellen Kommunikationsnetzes verbunden. Die Signalverarbeitungseinheit weist eine Multiplexereinheit zur parallelen Weiterleitung zu sendender Datenpakete an beide Sendeeinheiten und eine Redundanzbehandlungseinheit zur Verarbeitung von beiden Empfangseinheiten empfangener Datenpakete auf. **Außerdem ist zumindest ein über ein Koppelelement mit der Signalverarbeitungseinheit verbundener Netzanschluß für ein Automatisierungsgerät vorgesehen.** Ein Datenpaket kann beispielsweise ein Rahmen auf Sicherungsschichtebene, ein Paket auf vermittlungsschichtebene oder ein Segment auf Transportschichtebene sein. Die Redundanzbehandlungseinheit umfaßt eine Filtereinheit, die für eine Detektion empfangener redundanter Datenpakete eingerichtet ist.

Darüber hinaus ist die erste bzw. zweite Sende- und Empfangseinheit erfindungsgemäß sowohl für eine stoßbehaftete als auch für eine stoßfreie Datenübermittlung innerhalb des industriellen Kommunikationsnetzes eingerichtet und selektiv in einen stoßbehafteten oder stoßfreien Übermittlungsmodus umschaltbar. **Dabei wird nur im stoßfreien Übermittlungsmodus jedes Datenpaket von einem sendenden Kommunikationsgerät dupliziert und auf zwei verschiedenen Wegen zu einem Empfänger geschickt.** Mit der ersten bzw. zweiten Sende- und Empfangseinheit ist eine Auswerteeinheit verbunden, die eine für Detektion von stoßbehaftet oder stoßfrei innerhalb des industriellen Kommunikationsnetzes zu übermittelnden Datenpaketen eingerichtet ist. Dabei weist ein stoßbehaftet oder stoßfrei zu übermittelndes Datenpaket in zumindest in einem vorbestimmten Datenfeld eine Kennzeichnung für einen jeweiligen Übermittlungsmodus auf. Des weiteren sind die Redundanzbehandlungseinheit und die Filtereinheit bei Detektion eines stoßbehaftet zu übermittelnden Datenpakets deaktiviert. **Die Redundanzbehandlungseinheit ist für ein zwischenspeicherungs freies Weiterleiten von durch beide Empfangseinheiten empfangenen Datenpaketen an das Koppelelement eingerichtet. Auf diese Weise entfällt eine bisher übliche vollständige Pufferung von empfangenen Datenpaketen durch die Signalverarbeitungs- bzw. Redundanzbehandlungseinhezt einschließlich Verwaltung zwischengespeicherter Datenpakete.** Außerdem ist der ersten bzw. zweiten Sende- und Empfangseinheit eine Speichereinheit zugeordnet, die für eine Pufferung zumindest eines stoßbehaftet zu übermittelnden Datenpakets während einer vorgegebenen Zeitdauer im stoßbehafteten Übermittlungsmodus eingerichtet ist.

Insgesamt ermöglicht das erfindungsgemäße Kommunikationsgerät durch eine selektive Umschaltbarkeit in einen stoßbehafteten und in einen stoßfreien Übermittlungsmodus einerseits eine Verhinderung von übermäßigen Verzögerungen stoßfrei zu übertragender zeitkritischer Nachrichten, insbesondere bei hoher Netzlast. Andererseits kann die Speichereinheit zur Pufferung stoßbehaftet zu übermittelnder Datenpakete durch eine Unterteilung in stoßfrei und stoßbehaftet zu übermittelnde Datenpakete kleiner dimensioniert werden.

Das erfindungsgemäße Kommunikationsgerät kann beispielsweise als Kommunikationsmodul eine Komponente eines modularen Automatisierungsgeräts zur Steuerung oder Regelung von Anlagen, Maschinen oder Geräten sein. Ein solches modulares Automatisierungsgerät kann neben einem Kommunikationsmodul ein oder mehrere Zusatz- oder Funktionsmodule aufnehmen, um Funktionalitäten des Automatisierungsgeräts bereitzustellen bzw. zu erweitern. Derartige Zusatz- oder Funktionsmodule können beispielsweise Ein-/Ausgabemodule, Energieversorgungsmodule, oder ein zentrales Steuerungsmodul sein. Dabei können zu steuernde bzw. zu regelnde Anlagen, Maschinen oder Geräte mit Ein-/Ausgabemodulen, Kommunikationsmodulen oder einem zentralen Steuerungsmodul verbunden sein. Ein zentrales Steuerungsmodul kann dabei insbesondere ein fester Bestandteil eines modularen Automatisierungsgeräts sein. Darüber hinaus kann ein modulares Automatisierungsgerät auch als dezentrale Peripherie bezeichnete ausgelagerte bzw. prozeßnah angeordnete Steuerungseinheiten umfassen.

Für Kommunikationsverbindungen zwischen den Zusatz- oder Funktionsmodulen eines modularen Automatisierungsgeräts kann beispielsweise ein Rückwandbus zur seriellen bzw. parallelen Datenübertragung vorgesehen sein. Die Zusatz- oder Funktionsmodule sind vorteilhafterweise lösbar am Automatisierungsgerät befestigt. Sobald ein Zusatz- oder Funktionsmodul am Rückwandbus befestigt wird, kann dieses von anderen Zusatz- oder Funktionsmodulen über den Rückwandbus angesprochen werden, vorzugsweise in Echtzeit.

Das erfindungsgemäße Kommunikationsgerät kann für eine Verwendung sowohl in drahtgebundenen als auch in drahtungebundenen Netzwerken ausgebildet und eingerichtet sein. Beispielsweise kann das erfindungsgemäße Kommunikationsgerät eine Ethernet-Schnittstelle, eine WLAN-Schnittstelle, eine Schnittstelle für ein HART-Netz oder ein WirelessHART-Netz oder eine Schnittstelle für ein Feldbus-System, wie Profinet oder Profibus aufweisen.

Entsprechend einer vorteilhaften Weiterbildung des erfindungsgemäßen Kommunikationsgeräts ist die Signalverarbeitungseinheit für eine Vergabe einer Sequenznummer an ein stoßbehaftet zu übermittelndes Datenpaket bzw. ein Einfügen einer Redundanzinformation in ein stoßfrei zu übermittelndes Datenpaket nur bei Detektion eines stoßfrei zu übermittelnden Datenpakets eingerichtet. Auf diese Weise kann ein für eine Redundanzbehandlung bei stoßfrei zu übermittelnden Datenpaketen erforderlicher Verarbeitungsaufwand bei stoßbehaftet übermittelbaren Datenpaketen gezielt vermieden werden. Dementsprechend ist die Redundanzbehandlungseinheit vorzugsweise für eine Duplikatefilterung nur bei Detektion eines stoßfrei zu übermittelnden Datenpakets eingerichtet.

Das industrielle Kommunikationsnetz weist entsprechend einer bevorzugten Ausgestaltung der vorliegenden Erfindung eine Ringtopologie auf. Darüber hinaus ist in diesem Fall eine Überwachungs- und Steuerungseinheit vorgesehen, die für eine Detektion einer Unterbrechung innerhalb der Ringtopologie anhand versendeter Test-Datenpakete eingerichtet ist. Außerdem ist die Überwachungs- und Steuerungseinheit vorteilhafterweise für eine Steuerung einer Weiterleitung von Datenpaketen mit Nutzdaten, die an einen ersten Anschluß der ersten bzw. zweiten Sende- und Empfangseinheit gerichtet sind, an einen zweiten Anschluß der ersten bzw. zweiten Sende- und Empfangseinheit eingerichtet. Auf diese Weise können Redundanzbehandlungsverfahren für stoßfrei zu übermittelnde Datenpakete aufwandsarm realisiert werden.

Stoßbehaftet oder stoßfrei zu übermittelnde Datenpakete sind entsprechende einer besondere bevorzugten Ausgestaltung des erfindungsgemäßen Kommunikationsgeräts durch einen jeweiligen Eintrag in ein Ethertype-Feld eines Ethernet-Datenrahmens gekennzeichnet. Dies ermöglicht eine zuverlässige und einfache Detektion stoßbehaftet bzw. stoßfrei zu übermittelnder Datenpakete sowie deren entsprechende Behandlung. Darüber hinaus kann eine Kennzeichnung eines Datenpakets als stoßbehaftet oder stoßfrei zu übermittelnd von einem auf Sicherungsschichtebene jeweils anzuwendenden Kommunikationsprotokoll abhängig sein. Dies ermöglicht eine einfache und schnelle Unterteilung in stoßbehaftet und in stoßfrei zu übermittelnde Datenpakete. Vorzugsweise ist stoßfrei zu übermittelnden Datenpaketen eine höhere Priorität als stoßbehaftet zu übermittelnden Datenpaketen zugeordnet. Hierdurch wird ein Risiko einer verzögerten Übermittlung eines stoßfrei zu übermittelnden Datenpakets weiter reduziert. Eine besondere unproblematische Umsetzung ergibt sich, wenn stoßfrei zu übermittelnden Datenpaketen jeweils ein VLAN-Tag mit Priorität 6 entsprechend Standard IEEE 802.1Q zugeordnet ist.

Entsprechend einer weiteren vorteilhaften Ausgestaltung des erfindungsgemäßen Kommunikationsgeräts ist die Signalverarbeitungseinheit über eine erste und zweite Schnittstelle mit dem Koppelelement verbunden. In diesem Fall ist die erste Schnittstelle für eine Übermittlung durch die erste Empfangseinheit empfangener Datenpakete vorgesehen, während die zweite Schnittstelle für eine Übermittlung durch die zweite Empfangseinheit empfangener Datenpakete vorgesehen ist. Vorzugsweise umfaßt die Redundanzbehandlungseinheit zusätzliche eine Kennzeichnungseinheit, die für ein Einfügen eines Redundanzindikators in ein empfangenes redundantes Datenpaket eingerichtet ist.

Entsprechend dem erfindungsgemäßen Verfahren zum Betrieb eines Kommunikationsgeräts in einem redundanten industriellen Kommunikationsnetz umfaßt das Kommunikationsgerät zumindest eine erste und eine zweite Sende- und Empfangseinheit, die jeweils eine Schnittstelle für eine Netzwerkverbindung des industriellen Kommunikationsnetzes aufweisen. Dabei weisen beide Sende- und Empfangseinheiten eine identische Netzwerkadresse und einen identischen Geräteidentifikator auf. Mit der ersten und zweiten Sende- und Empfangseinheit ist eine Signalverarbeitungseinheit für eine stoßfreie Datenübermittlung innerhalb des industriellen Kommunikationsnetzes verbunden, die zu sendende Datenpakete parallel an beide Sendeeinheiten weiterleitet und von den Empfangseinheiten empfangene redundante Datenpakete detektiert. **Außerdem ist zumindest ein über ein Koppelelement mit der Signalverarbeitungseinheit verbundener Netzanschluß für ein Automatisierungsgerät vorge**sehen.

Darüber hinaus übermittelt die erste bzw. zweite Sende- und Empfangseinheit entsprechend dem erfindungsgemäßen Verfahren Datenpakete innerhalb des industriellen Kommunikationsnetzes wahlweise stoßbehaftet oder stoßfrei und wird selektiv in einen stoßbehafteten oder stoßfreien Übermittlungsmodus umgeschaltet. **Nur im stoßfreien Übermittlungsmodus wird jedes Datenpaket von einem sendenden Kommunikationsgerät dupliziert und auf zwei verschiedenen Wegen zu einem Empfänger geschickt.** Mit der ersten bzw. zweiten Sende- und Empfangseinheit ist eine Auswerteeinheit verbunden, die stoßbehaftet oder stoßfrei innerhalb des industriellen Kommunikationsnetzes zu übermittelnde Datenpakete detektiert. Dabei weist ein stoßbehaftet oder stoßfrei zu übermittelndes Datenpaket in zumindest in einem vorbestimmten Datenfeld eine Kennzeichnung für einen jeweiligen Übermittlungsmodus auf, die durch die Auswerteeinheit ausgewertet wird. Des weiteren werden eine Redundanzbehandlungseinheit zur Verarbeitung von beiden Empfangseinheiten empfangener Datenpakete und eine Filtereinheit zur Detektion empfangener redundanter Datenpakete bei Detektion eines stoßbehaftet zu übermittelnden Datenpakets deaktiviert. **Die Redundanzbehandlungseinheit** leitet durch beide **Empfangseinheiten** **empfangene Datenpakete zwischenspeicherungsfrei an das Koppelelement weiter. Damit entfällt eine vollständige Pufferung von empfangenen Datenpaketen durch die Signalverarbeitungs- bzw. Redundanzbehandlungseinheit.** Außerdem ist der ersten bzw. der zweiten Sende- und Empfangseinheit eine Speichereinheit zugeordnet, die im stoßbehafteten Übermittlungsmodus zumindest ein stoßbehaftet zu übermittelndes Datenpaket während einer vorgegebenen Zeitdauer puffert.

Das erfindungsgemäße Verfahren verringert somit einerseits Verzögerungen stoßfrei zu übertragender zeitkritischer Nachrichten. Andererseits kann eine kleiner dimensionierte Speichereinheit zur Pufferung stoßbehaftet zu übermittelnder Datenpakete verwendet werden.

Vorzugsweise vergibt die Signalverarbeitungseinheit nur bei Detektion eines stoßfrei zu übermittelnden Datenpakets eine Sequenznummer an das stoßbehaftet zu übermittelnde Datenpaket vergibt bzw. fügt eine Redundanzinformation in das stoßfrei zu übermittelnde Datenpaket ein. Dementsprechend filtert die Redundanzbehandlungseinheit entsprechend einer weiteren Ausgestaltung des erfindungsgemäßen Verfahrens nur bei Detektion eines stoßfrei zu übermittelnden Datenpakets Duplikate von empfangenen redundanten Datenpaketen.

Das industrielle Kommunikationsnetz kann beispielsweise eine Ringtopologie aufweisen. In diesem Fall ist vorteilhafterweise eine Überwachungs- und Steuerungseinheit vorgesehen, die eine Unterbrechung innerhalb der Ringtopologie anhand versendctcr Test-Datenpakete detektiert. Zusätzlich kann die Überwachungs- und Steuerungseinheit eine Weiterleitung von Datenpaketen mit Nutzdaten, die an einen ersten Anschluß der ersten bzw. zweiten Sende- und Empfangseinheit gerichtet sind, an einen zweiten Anschluß der ersten bzw. zweiten Sende- und Empfangseinheit steuern.

Stoßbehaftet oder stoßfrei zu übermittelnde Datenpakete werden entsprechend einer vorteilhaften Weiterbildung des erfindungsgemäßen Verfahrens durch einen jeweiligen Eintrag in ein Ethertype-Feld eines Ethernet-Datenrahmens gekennzeichnet. Beispielsweise können Datenpakete abhängig von einem auf Sicherungsschichtebene jeweils anzuwendendem Kommunikationsprotokoll als stoßbehaftet oder stoßfrei zu übermittelnd gekennzeichnet werden. Des weiteren kann stoßfrei zu übermittelnden Datenpaketen eine höhere Priorität als stoßbehaftet zu übermittelnden Datenpaketen zugeordnet werden. Dies ergibt ein verringertes Risiko einer verzögerten Übermittlung eines stoßfrei zu übermittelnden Datenpakets.

Entsprechend einer weiteren Ausgestaltung des erfindungsgemäßen Verfahrens umfaßt die Redundanzbehandlungseinheit eine Kennzeichnungseinheit, die jeweils einen Redundanzindikator in empfangene redundante Datenpakete einfügt.

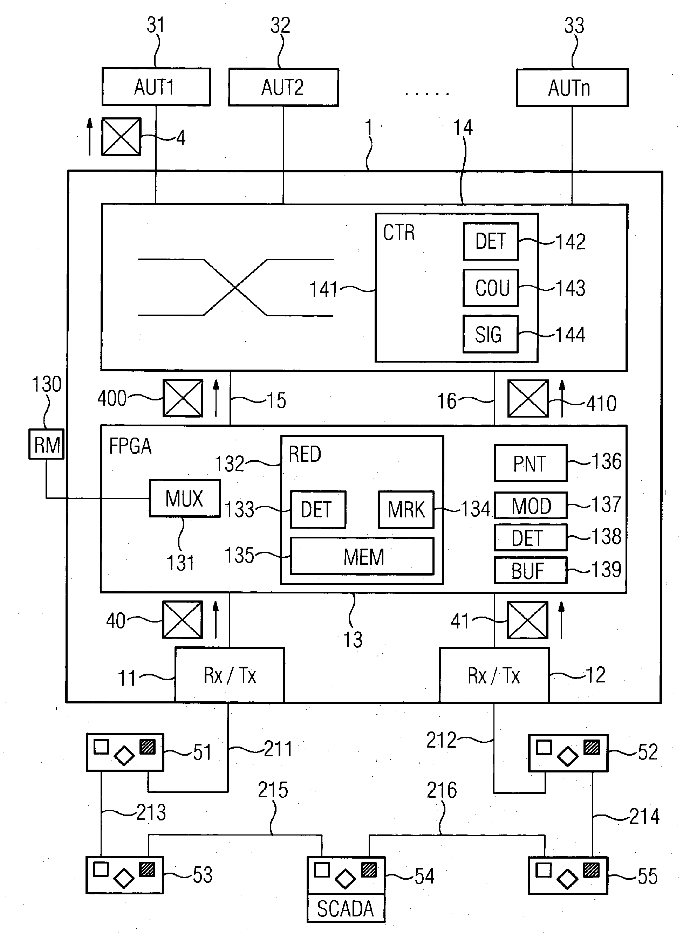

Die vorliegende Erfindung wird nachfolgend an einem Ausführungsbeispiel anhand der Zeichnung näher erläutert. Es zeigt die
- Figur: eine schematische Darstellung eines Kommunikationsgerät für ein redundant betreibbares industrielles Kommunikationsnetz.

In der Figur ist ein industrielles Kommunikationsnetz 2 dargestellt, das neben einem nachfolgend detailliert beschriebenen Kommunikationsgerät 1 mehrere in einer Ringstruktur über Netzwerkverbindungen 211-216 miteinander verbundene Netzknoten 51-55 umfaßt. Hierzu kann beispielsweise ein Netzknoten 54 zählen, der einem SCADA-System (supervisory control and data acquisition) eines industriellen Fertigungs- oder Prozeßautomatisierungssystems zugeordnet ist.

Das Kommunikationsgerät 1 für ein redundant betreibbares industrielles Kommunikationsnetz 2 umfaßt eine erste 11 und eine zweite Sende- und Empfangseinheit 12, die jeweils eine Schnittstelle für eine Netzwerkverbindung 211, 212 des industriellen Kommunikationsnetzes 2 aufweisen. Die beiden Sende- und Empfangseinheiten 11, 12 weisen eine identische Netzwerkadresse und eine identische MAC-Adresse auf. Mit der ersten und zweiten Sende- und Empfangseinheit 11, 12 ist eine durch ein Field Programmable Gate Array (FPGA) realisierte Signalverarbeitungseinheit 13 innerhalb des industriellen Kommunikationsnetzes 2 verbunden. Die Signalverarbeitungseinheit 13 weist für eine stoßfreie Datenübermittlung eine Multiplexereinheit 131 zur parallelen Weiterleitung zu sendender Datenpakete an beide Sendeeinheiten 11, 12 und eine Redundanzbehandlungseinheit 132 zur Verarbeitung von beiden Empfangseinheiten 11, 12 empfangener Datenpakete 40, 41 auf. Die Redundanzbehandlungseinheit 132 umfaßt eine Filtereinheit 133, die für eine Detektion empfangener redundanter Datenpakete eingerichtet ist.

Die erste und zweite Sende- und Empfangseinheit 11, 12 sind für eine wahlweise stoßbehaftete oder stoßfreie Datenübermittlung innerhalb des industriellen Kommunikationsnetzes 2 eingerichtet und mittels einer der Signalverarbeitungseinheit 13 zugeordneten Betriebsmodusauswahleinheit 137 selektiv in einen stoßbehafteten oder stoßfreien Übermittlungsmodus umschaltbar. Der Signalverarbeitungseinheit 13 ist außerdem eine Auswerteeinheit 138 zugeordnet, die stoßbehaftet oder stoßfrei innerhalb des industriellen Kommunikationsnetzes 2 zu übermittelnde Datenpakete detektiert. Dabei weist ein stoßbehaftet oder stoßfrei zu übermittelndes Datenpaket in zumindest in einem vorbestimmten Datenfeld eine Kennzeichnung für einen jeweiligen Übermittlungsmodus aufweist, die durch die Auswerteeinheit 138 ausgewertet wird.

Stoßbehaftet bzw. stoßfrei zu übermittelnde Datenpakete werden durch einen jeweiligen Eintrag in ein Ethertype-Feld eines Ethernet-Datenrahmens gekennzeichnet. Vorzugsweise werden Datenpakete abhängig von einem jeweils auf Sicherungsschichtebene (Ebene 2 entsprechend ISO/OSI-Kommunikationsmodell) anzuwendendem Kommunikationsprotokoll als stoßbehaftet oder stoßfrei zu übermittelnd gekennzeichnet. Zur Vermeidung von Übermittlungsverzögerungen wird stoßfrei zu übermittelnden Datenpaketen eine höhere Priorität als stoßbehaftet zu übermittelnden Datenpaketen zugeordnet. Beispielsweise wird stoßfrei zu übermittelnden Datenpaketen jeweils ein VLAN-Tag mit Priorität 6 entsprechend Standard IEEE 802.1Q zugeordnet.

Bei Detektion eines stoßbehaftet zu übermittelnden Datenpakets werden die Redundanzbehandlungseinheit 132 und die Filtereinheit 133 durch die Betriebsmodusauswahleinheit 137 deaktiviert. Die Signalverarbeitungseinheit 13 umfaßt darüber hinaus eine Speichereinheit 139, die für die erste und zweite Sende- und Empfangseinheit 11, 12 im stoßbehafteten Übermittlungsmodus stoßbehaftet zu übermittelnde Datenpakete während einer vorgegebenen Zeitdauer puffert.

Der Signalverarbeitungseinheit 13 ist im vorliegenden Ausführungsbeispiel ein Redundanz-Manager 130 zugeordnet, der eine Unterbrechung innerhalb der Ringtopologie des Kommunikationsnetzes 2 anhand versendeter Test-Datenpakete detektiert und eine Weiterleitung von Datenpaketen mit Nutzdaten, die durch die erste Sende- und Empfangseinheit 11 empfangen werden, an die zweite Sende- und Empfangseinheit 12 steuert. Dies erfolgt beispielsweise entsprechend Media Redundancy Protocol oder einem funktionell vergleichbaren Kommunikationsprotokoll.

Über ein durch einen Backplane Switch realisiertes Koppelelement 14 sind mehrere Automatisierungsgeräte 31-33 mit der Signalverarbeitungseinheit 13 verbunden. Das einen zugeordneten Controller 141 aufweisende Koppelelement 14 ist über jeweils einen Interlink-Anschluß mit den Automatisierungsgeräten 31-33 verbunden. Zusätzlich weist die Signalverarbeitungseinheit 13 eine Speichereinheit 136 auf, in der eine Tabelle (proxy node table) mit Angaben zu sämtlichen mit dem Koppelelement 14 verbundenen Automatisierungsgeräten 31-33 gespeichert ist.

Die mittels eines Field Programmable Gate Arrays realisierte Signalverarbeitungseinheit 13 ist über eine erste und zweite Schnittstelle 15, 16 mit dem Koppelelement 14 verbunden. Dabei ist die erste Schnittstelle 15 im stoßfreien Übermittlungsmodus ausschließlich für eine Übermittlung durch die erste Empfangseinheit 11 empfangener Datenpakete 40 vorgesehen, während die zweite Schnittstelle 16 im stoßfreien Übermittlungsmodus ausschließlich für eine Übermittlung durch die zweite Empfangseinheit 12 empfangener Datenpakete vorgesehen 41 ist. Bei einer stoßbehafteten Übermittlung wird nur eine der beiden Schnittstellen 15, 16 verwendet. Dies wird durch die Betriebsmodusauswahleinheit 137 gesteuert.

Die der Signalverarbeitungseinheit 13 zugeordnete Redundanzbehandlungseinheit 132 umfaßt eine Kennzeichnungseinheit 134, die für ein Einfügen eines Redundanzindikators in ein empfangenes redundantes Datenpaket 40, 41 im stoßfreien Übermittlungsmodus eingerichtet ist. Im vorliegenden Ausführungsbeispiel umfaßt ein Datenpaket zumindest einen Datenrahmen. Der Redundanzindikator wird im stoßfreien Übermittlungsmodus durch Einfügen eines ungültigen Datums in einen Datenrahmen gebildet. Darüber hinaus leitet die Signalverarbeitungseinheit 13 im stoßfreien Übermittlungsmodus durch beide Empfangseinheiten 11, 12 empfangene Datenpakete 40, 41 zwischenspeicherüngsfrei an das Koppelelement 14 weiter. Entsprechend dem vorliegenden Ausführungsbeispiel erfolgt im stoßfreien Übermittlungsmodus ein Verwerfen eines redundanten Datenpakets erst im Koppelelement 14.

Die durch beide Empfangseinheiten 11, 12 empfangenen Datenpakete 40, 41 unterscheiden sich von im stoßfreien Übermittlungsmodus an das Koppelelement 14 über die erste und zweite Schnittstelle 15, 16 weitergeleiteten Datenpaketen 400, 401 lediglich bei einem Duplikat, und zwar durch ein eingefügtes ungültiges Datum. Die Redundanzbehandlungseinheit 132 filtert nur bei Detektion eines stoßfrei zu übermittelnden Datenpakets Duplikate von empfangenen redundanten Datenpaketen. In entsprechender Weise vergibt die Signalverarbeitungseinheit 13 nur bei Detektion eines stoßfrei zu übermittelnden Datenpakets eine Sequenznummer an das stoßbehaftet zu übermittelnde Datenpaket und fügt eine Redundanzinformation in das stoßfrei zu übermittelnde Datenpaket ein.

Grundsätzlich reicht es aus, wenn in einer der Signalverarbeitungseinheit 13 zugeordneten Speichereinheit 135 im stoßfreien Übermittlungsmodus lediglich Sequenznummern von bereits fehlerfrei empfangenen Datenpaketen gespeichert werden. Zur Kennzeichnung empfangener redundanter Datenpakete im stoßfreien Übermittlungsmodus überprüft die Signalverarbeitungseinheit 13 bei Empfang eines neuen Datenpakets dessen Sequenznummer einfach auf Übereinstimmung mit einer bereits gespeicherten Sequenznummer. Redundanzindikatoren in empfangenen Datenpaketen, wie ein ungültiges Datum, werden im stoßfreien Übermittlungsmodus vorzugsweise durch eine Detektionseinheit 142 ausgewertet, die dem Controller 141 des Koppelelements 14 zugeordnet ist und Datenpakete mit Redundanzindikatoren verwirft. Dies kann beispielsweise auf Basis einer zyklischen Redundanzprüfung (cyclic redundancy check) erfolgen.

Dem Controller 141 des Koppelelements 14 ist außerdem eine Zählereinheit 143 zugeordnet, die fehlerfrei und fehlerbehaftet empfangene Datenpakete erfaßt. Eine dem Controller 141 des Koppelelements 14 zugeordnete Auswerteeinheit 144 signalisiert bei einer unter einem vorgebbaren Schwellwert liegenden Differenz zwischen fehlerfrei und fehlerbehaftet empfangenen Datenpaketen einen fehlerfreien redundanten Netzzustand. Fehlerbehaftet empfangene Datenpakete werden vorzugsweise mittels einer zyklischen Redundanzprüfung ermittelt.

Bei einer steigenden Anzahl von fehlerfrei empfangenen Datenpaketen und einer zugleich im wesentlichen stagnierenden Anzahl von fehlerbehaftet empfangenen Datenpaketen signalisiert die Auswerteeinheit 144 einen Netzzustand mit Redundanzverlust. Einen Netzausfall signalisiert die Auswerteeinheit 144 bei einer stagnierenden Anzahl von fehlerfrei und von fehlerbehaftet empfangenen Datenpaketen.

Die Merkmale der vorangehend beschriebenen Ausführungsbeispiele können sowohl einzeln als auch in beschriebener Kombination miteinander realisiert sein.

## Patentansprüche

1. Kommunikationsgerät für ein redundant betreibbares industrielles Kommunikationsnetz mit
- zumindest einer ersten und einer zweiten Sende- und Empfangseinheit (11, 12), die jeweils eine Schnittstelle für eine Netzwerkverbindung des industriellen Kommunikationsnetzes (2) aufweisen, wobei beide Sende- und Empfangseinheiten eine identische Netzwerkadresse und einen identischen Geräteidentifikator aufweisen,
- einer mit der ersten und zweiten Sende- und Empfangseinheit verbundenen Signalverarbeitungseinheit (13) für eine stoßfreie Datenübermittlung innerhalb des industriellen Kommunikationsnetzes, wobei die Signalverarbeitungseinheit eine Multiplexereinheit (131) zur parallelen Weiterleitung zu sendender Datenpakete an beide Sendeeinheiten und eine Redundanzbehandlungseinheit (132) zur Verarbeitung von beiden Empfangseinheiten empfangener Datenpakete aufweist, und wobei die Redundanzbehandlungseinheit eine Filtereinheit (133) umfaßt, die für eine Detektion empfangener redundanter Datenpakete eingerichtet ist,
- **zumindest einem über ein Koppelelement (14) mit der Signalverarbeitungseinheit verbundenen Netzanschluß für ein Automatisierungsgerät (31-33),**
**dadurch gekennzeichnet, daß**
- die erste und/oder zweite Sende- und Empfangseinheit für eine stoßbehaftete und stoßfreie Datenübermittlung innerhalb des industriellen Kommunikationsnetzes eingerichtet und selektiv in einen stoßbehafteten oder stoßfreien Übermittlungsmodus umschaltbar ist, **wobei nur im stoßfreien Übermittlungsmodus jedes Datenpaket von einem sendenden Kommunikationsgerät dupliziert und auf zwei verschiedenen Wegen zu einem Empfänger geschickt wird,**
- mit der ersten und/oder zweiten Sende- und Empfangseinheit eine Auswerteeinheit (138) verbunden ist, die eine für Detektion von stoßbehaftet oder stoßfrei innerhalb des industriellen Kommunikationsnetzes zu übermittelnden Datenpaketen eingerichtet ist, wobei ein stoßbehaftet oder stoßfrei zu übermittelndes Datenpaket in zumindest in einem vorbestimmten Datenfeld eine Kennzeichnung für einen jeweiligen Übermittlungsmodus aufweist,
- die Redundanzbehandlungseinheit und die Filtereinheit bei Detektion eines stoßbehaftet zu übermittelnden Datenpakets deaktiviert sind,
- **die Redundanzbehandlungseinheit für ein zwischenspeicherungsfreies Weiterleiten von durch beide Empfangseinheiten empfangenen Datenpaketen an das Koppelelement einge**richtet ist,
- der ersten und/oder zweiten Sende- und Empfangseinheit eine Speichereinheit (139) zugeordnet ist, die für eine Pufferung zumindest eines stoßbehaftet zu übermittelnden Datenpakets während einer vorgegebenen Zeitdauer im stoßbehafteten Übermittlungsmodus eingerichtet ist.

2. Kommunikationsgerät nach Anspruch 1,
bei dem die Signalverarbeitungseinheit für eine Vergabe einer Sequenznummer an ein stoßbehaftet zu übermittelndes Datenpaket und/oder ein Einfügen einer Redundanzinformation in ein stoßfrei zu übermittelndes Datenpaket nur bei Detektion eines stoßfrei zu übermittelnden Datenpakets eingerichtet ist.

3. Kommunikationsgerät nach einem der Ansprüche 1 oder 2,
bei dem die Redundanzbehandlungseinheit für eine Duplikatefilterung nur bei Detektion eines stoßfrei zu übermittelnden Datenpakets eingerichtet ist.

4. Kommunikationsgerät nach einem der Ansprüche 1 bis 3,
bei dem das industrielle Kommunikationsnetz eine Ringtopologie aufweist, und bei dem eine Überwachungs- und Steuerungseinheit (130) vorgesehen ist, die für eine Detektion einer Unterbrechung innerhalb der Ringtopologie anhand versendeter Test-Datenpakete und für eine Steuerung einer Weiterleitung von Datenpaketen mit Nutzdaten, die an einen ersten Anschluß der ersten und/oder zweiten Sende- und Empfangseinheit gerichtet sind, an einen zweiten Anschluß der ersten und/oder zweiten Sende- und Empfangseinheit eingerichtet ist.

5. Kommunikationsgerät nach einem der Ansprüche 1 bis 4,
bei dem stoßbehaftet oder stoßfrei zu übermittelnde DaLenpakete durch einen jeweiligen Eintrag in ein Ethertype-Feld eines Ethernet-Datenrahmens gekennzeichnet sind.

6. Kommunikationsgerät nach einem der Ansprüche 1 bis 5,
bei dem eine Kennzeichnung eines Datenpakets als stoßbehaftet oder stoßfrei zu übermittelnd von einem auf Sicherungsschichtebene jeweils anzuwendenden Kommunikationsprotokoll abhängig ist.

7. Kommunikationsgerät nach einem der Ansprüche 1 bis 6,
bei dem stoßfrei zu übermittelnden Datenpaketen eine höhere Priorität als stoßbehaftet zu übermittelnden Datenpaketen zugeordnet ist.

8. Kommunikationsgerät nach Anspruch 7,
bei dem stoßfrei zu übermittelnden Datenpaketen jeweils ein VLAN-Tag mit Priorität 6 entsprechend Standard IEEE 802.1Q zugeordnet ist.

9. Kommunikationsgerät nach einem der Ansprüche 1 bis 8,
bei dem die Signalverarbeitungseinheit über eine erste und zweite Schnittstelle (15, 16) mit dem Koppelelement verbunden ist, wobei die erste Schnittstelle für eine Übermittlung durch die erste Empfangseinheit empfangener Datenpakete vorgesehen ist, und wobei die zweite Schnittstelle für eine Übermittlung durch die zweite Empfangseinheit empfangener Datenpakete vorgesehen ist.

10. Kommunikationsgerät nach einem der Ansprüche 1 bis 9,
bei dem die Redundanzbehandlungseinheit eine Kennzeichnungeinheit (134) umfaßt, die für ein Einfügen eines Redundanzindikators in ein empfangenes redundantes Datenpaket eingerichtet ist.

11. Verfahren zum Betrieb eines Kommunikationsgeräts in einem redundanten industriellen Kommunikationsnetz, bei dem
- das Kommunikationsgerät (1) zumindest eine erste und eine zweite Sende- und Empfangseinheit (11, 12) umfaßt, die jeweils eine Schnittstelle für eine Netzwerkverbindung (211, 212) des industriellen Kommunikationsnetzes (2) aufweisen, wobei beide Sende- und Empfangseinheiten eine identische Netzwerkadresse und einen identischen Geräteidentifikator aufweisen,
- mit der ersten und zweiten Sende- und Empfangseinheit eine Signalverarbeitungseinheit (13) für eine stoßfreie Datenübermittlung innerhalb des industriellen Kommunikationsnetzes verbunden ist, die zu sendende Datenpakete parallel an beide Sendeeinheiten weiterleitet und von den Empfangseinheiten empfangene redundante Datenpakete detektiert,
- **zumindest ein über ein Koppelelement (14) mit der Signalverarbeitungseinheit verbundener Netzanschluß für ein Automatisierungsgerät (31-33) vorgesehen ist,**
**dadurch gekennzeichnet, daß**
- die erste und/oder zweite Sende- und Empfangseinheit Datenpakete innerhalb des industriellen Kommunikationsnetzes wahlweise stoßbehaftet oder stoßfrei übermittelt und selektiv in einen stoßbehafteten oder stoßfreien Übermittlungsmodus umgeschaltet wird, **wobei nur im stoßfreien Übermittlungsmodus jedes Datenpaket von einem sendenden Kommunikationsgerät dupliziert und auf zwei verschiedenen Wegen zu einem Empfänger geschickt wird,**
- mit der ersten und/oder zweiten Sende- und Empfangseinheit eine Auswerteeinheit (138) verbunden ist, die stoßbehaftet oder stoßfrei innerhalb des industriellen Kommunikationsnetzes zu übermittelnde Datenpakete detektiert, wobei ein stoßbehaftet oder stoßfrei zu übermittelndes Datenpaket in zumindest in einem vorbestimmten Datenfeld eine Kennzeichnung für einen jeweiligen Übermittlungsmodus aufweist, die durch die Auswerteeinheit ausgewertet wird,
- eine Redundanzbehandlungseinheit (132) zur Verarbeitung von beiden Empfangseinheiten empfangener Datenpakete und eine Filtereinheit (133) zur Detektion empfangener redundanter Datenpakete bei Detektion eines stoßbehaftet zu übermittelnden Datenpakets deaktiviert werden,
- **die Redundanzbehandlungseinheit durch beide Empfangseinheiten empfangene Datenpakete zwischenspeicherungsfrei an das Koppelelement weiterleitet,**
- der ersten und/oder zweiten Sende- und Empfangseinheit eine Speichereinheit (139) zugeordnet ist, die im stoßbehafteten Übermittlungsmodus zumindest ein stoßbehaftet zu übermittelndes Datenpaket während einer vorgegebenen Zeitdauer puffert.

12. Verfahren nach Anspruch 11,
bei dem die Signalverarbeitungseinheit nur bei Detektion eines stoßfrei zu übermittelnden Datenpakets eine Sequenznummer an das stoßbehaftet zu übermittelnde Datenpaket vergibt und/oder eine Redundanzinformation in das stoßfrei zu übermittelnde Datenpaket einfügt.

13. Verfahren nach einem der Ansprüche 11 oder 12,
bei dem die Redundanzbehandlungseinheit nur bei Detektion eines stoßfrei zu übermittelnden Datenpakets Duplikate von empfangenen redundanten Datenpaketen filtert.

14. Verfahren nach einem der Ansprüche 11 bis 13,
bei dem das industrielle Kommunikationsnetz eine Ringtopologie aufweist, und bei dem eine Überwachungs- und Steuerungseinheit (130) vorgesehen ist, die eine Unterbrechung innerhalb der Ringtopologie anhand versendeter Test-Datenpakete detektiert und eine Weiterleitung von Datenpaketen mit Nutzdaten, die an einen ersten Anschluß der ersten und/oder zweiten Sende- und Empfangseinheit gerichtet sind, an einen zweiten Anschluß der ersten und/oder zweiten Sende- und Empfangseinheit steuert.

15. Verfahren nach einem der Ansprüche 11 bis 14,
bei dem stoßbehaftet oder stoßfrei zu übermittelnde Dateazpakete durch einen jeweiligen Eintrag in ein Ethertype-Feld eines Ethernet-Datenrahmens gekennzeichnet werden.

16. Verfahren nach einem der Ansprüche 11 bis 15,
bei dem Datenpakete abhängig von einem auf Sicherungsschichtebene jeweils anzuwendendem Kommunikationsprotokoll als stoßbehaftet oder stoßfrei zu übermittelnd gekennzeichnet werden.

17. Verfahren nach einem der Ansprüche 11 bis 16,
bei dem stoßfrei zu übermittelnden Datenpaketen eine höhere Priorität als stoßbehaftet zu übermittelnden Datenpaketen zugeordnet wird.

18. Verfahren nach einem der Ansprüche 11 bis 17,
bei dem die Redundanzbehandlungseinheit eine Kennzeichnungseinheit (134) umfaßt, die jeweils einen Redundanzindikator in empfangene redundante Datenpakete einfügt.

## Claims

1. Communication device for an industrial communication network which can be operated in a redundant manner, having
- at least one first and one second transmitting and receiving unit (11, 12) each having an interface for a network connection of the industrial communication network (2), both transmitting and receiving units having an identical network address and an identical device identifier,
- a signal processing unit (13) connected to the first and second transmitting and receiving units for bumplessly transmitting data inside the industrial communication network, the signal processing unit having a multiplexer unit (131) for forwarding data packets to be transmitted to both transmitting units in a parallel manner and a redundancy handling unit (132) for processing data packets received by both receiving units, and the redundancy handling unit comprising a filter unit (133) which is set up to detect received redundant data packets,
- in which at least one network connection connected to the signal processing unit via a coupling element (14) for an automation device (31-33),
**characterized in that**
- the first and/or second transmitting and receiving unit(s) is/are set up for bumpy and bumpless data transmission inside the industrial communication network and can be selectively changed over to a bumpy or bumpless transmission mode, each data packet only being duplicated in the bumpless transmission mode by a transmitting communication device and being sent to a receiver on two different paths,
- an evaluation unit (138) is connected to the first and/or second transmitting and receiving unit(s) and is set up to detect data packets to be transmitted in a bumpy or bumpless manner inside the industrial communication network, a data packet to be transmitted in a bumpy or bumpless manner having an identification for a respective transmission mode at least in a predetermined data field,
- the redundancy handling unit and the filter unit are deactivated when a data packet to be transmitted in a bumpy manner is detected,
- is the redundancy handling unit set up to forward data packets received by both receiving units to the coupling element without buffering,
- a memory unit (139) is assigned to the first and/or second transmitting and receiving unit(s) and is set up to buffer at least one data packet to be transmitted in a bumpy manner during a predefined period of time in the bumpy transmission mode.

2. Communication device according to Claim 1,
in which the signal processing unit is set up to allocate a sequence number to a data packet to be transmitted in a bumpy manner and/or to insert an item of redundancy information in a data packet to be transmitted in a bumpless manner only if a data packet to be transmitted in a bumpless manner is detected.

3. Communication device according to either of Claims 1 and 2,
in which the redundancy handling unit is set up to filter duplicates only if a data packet to be transmitted in a bumpless manner is detected.

4. Communication device according to one of Claims 1 to 3,
in which the industrial communication network has a ring topology, and in which a monitoring and control unit (130) is provided and is set up to detect an interruption inside the ring topology using transmitted test data packets and to control forwarding of data packets containing useful data, which are addressed to a first connection of the first and/or second transmitting and receiving unit(s), to a second connection of the first and/or second transmitting and receiving unit(s).

5. Communication device according to one of Claims 1 to 4,
in which data packets to be transmitted in a bumpy or bumpless manner are identified by a respective entry in an Ethertype field of an Ethernet data frame.

6. Communication device according to one of Claims 1 to 5,
in which identification of a data packet as a data packet to be transmitted in a bumpy or bumpless manner is dependent on a communication protocol to be respectively applied at the data link layer.

7. Communication device according to one of Claims 1 to 6,
in which data packets to be transmitted in a bumpless manner are assigned a higher priority than data packets to be transmitted in a bumpy manner.

8. Communication device according to Claim 7,
in which data packets to be transmitted in a bumpless manner are each assigned a VLAN tag with a priority of 6 according to the IEEE 802.1Q standard.

9. Communication device according to one of Claims 1 to 8,
in which the signal processing unit is connected to the coupling element via a first and a second interface (15, 16), the first interface being provided for transmitting data packets received by the first receiving unit, and the second interface being provided for transmitting data packets received by the second receiving unit.

10. Communication device according to one of Claims 1 to 9,
in which the redundancy handling unit comprises an identification unit (134) which is set up to insert a redundancy indicator in a received redundant data packet.

11. Method for operating a communication device in a redundant industrial communication network, in which
- the communication device (1) comprises at least one first and one second transmitting and receiving unit (11, 12) each having an interface for a network connection (211, 212) of the industrial communication network (2), both transmitting and receiving units having an identical network address and an identical device identifier,
- a signal processing unit (13) is connected to the first and second transmitting and receiving units for bumplessly transmitting data inside the industrial communication network, which signal processing unit forwards data packets to be transmitted to both transmitting units in a parallel manner and detects redundant data packets received by the receiving units,
- at least one network connection connected to the signal processing unit via a coupling element (14) is provided for an automation device (31-33),
**characterized in that**
- the first and/or second transmitting and receiving unit(s) transmit(s) data packets in a bumpy or bumpless manner inside the industrial communication network and is/are selectively changed over to a bumpy or bumpless transmission mode, each data packet only being duplicated in the bumpless transmission mode by a transmitting communication device and being sent to a receiver on two different paths,
- an evaluation unit (138) is connected to the first and/or second transmitting and receiving unit(s) and detects data packets to be transmitted in a bumpy or bumpless manner inside the industrial communication network, a data packet to be transmitted in a bumpy or bumpless manner having an identification for a respective transmission mode at least in a predetermined data field, which identification is evaluated by the evaluation unit,
- a redundancy handling unit (132) for processing data packets received by both receiving units and a filter unit (133) for detecting received redundant data packets are deactivated when a data packet to be transmitted in a bumpy manner is detected,
- forwards data packets received by both receiving units to the coupling element without buffering,
- a memory unit (139) is assigned to the first and/or second transmitting and receiving unit(s) and buffers at least one data packet to be transmitted in a bumpy manner during a predefined period of time in the bumpy transmission mode.

12. Method according to Claim 11,
in which the signal processing unit allocates a sequence number to the data packet to be transmitted in a bumpy manner and/or inserts an item of redundancy information in the data packet to be transmitted in a bumpless manner only if a data packet to be transmitted in a bumpless manner is detected.

13. Method according to either of Claims 11 and 12,
in which the redundancy handling unit filters duplicates from received redundant data packets only if a data packet to be transmitted in a bumpless manner is detected.

14. Method according to one of Claims 11 to 13,
in which the industrial communication network has a ring topology, and in which a monitoring and control unit (130) is provided and detects an interruption inside the ring topology using transmitted test data packets and controls forwarding of data packets containing useful data, which are addressed to a first connection of the first and/or second transmitting and receiving unit(s), to a second connection of the first and/or second transmitting and receiving unit(s).

15. Method according to one of Claims 11 to 14,
in which data packets to be transmitted in a bumpy or bumpless manner are identified by a respective entry in an Ethertype field of an Ethernet data frame.

16. Method according to one of Claims 11 to 15,
in which data packets are identified as data packets to be transmitted in a bumpy or bumpless manner in a manner dependent on a communication protocol to be respectively applied at the data link layer.

17. Method according to one of Claims 11 to 16,
in which data packets to be transmitted in a bumpless manner are assigned a higher priority than data packets to be transmitted in a bumpy manner.

18. Method according to one of Claims 11 to 17,
in which the redundancy handling unit comprises an identification unit (134) which respectively inserts a redundancy indicator in received redundant data packets the redundancy handling unit.

## Revendications

1. Appareil de communication pour un réseau de communication industriel pouvant fonctionner de manière redondante comprenant
- au moins une première et une deuxième unités ( 11, 12 ) d'émission et de réception, qui ont respectivement une interface pour une liaison du réseau ( 2 ) de communication industriel, les deux unités d'émission et de réception ayant une adresse de réseau identique et un identificateur d'appareil identique,
- une unité ( 13 ) de traitement du signal reliée à la première et à la deuxième unités d'émission et de réception pour une transmission de données sans à-coup au sein du réseau de communication industriel, l'unité de transmission de signal comportant une unité ( 131 ) de multiplexeur pour l'acheminement en parallèle de paquets de données à envoyer aux deux unités d'émission et une unité ( 132 ) de traitement de redondance pour le traitement de paquets de données reçus par les deux unités de réception, et l'unité de traitement de redondance comprend une unité ( 133 ) de filtrage, qui est agencée pour une détection de paquets de données redondants qui ont été reçus,
- pour un appareil ( 31 à 33 ) d'automatisation, au moins un raccordement de réseau relié à l'unité de traitement de signal par un élément ( 14 ) de couplage,
**caractérisé en ce que**
- la première et/ou la deuxième unité( s ) d'émission et de réception est agencée pour une transmission de données avec à-coup et sans à-coup au sein du réseau de communication industriel et peut être commutée sélectivement dans un mode de transmission avec à-coup ou sans à-coup, dans lequel, seulement dans le mode de transmission sans à-coup, chaque paquet de données est dupliqué par un appareil de communication émettant et est envoyé à un récepteur sur deux voies différentes,
- à la première et/ou à la deuxième unité ( s ) d'émission et de réception est reliée une unité ( 138 ) d'exploitation, qui est agencée pour la détection de paquets de données à transmettre avec à-coup ou sans à-coup au sein du réseau de communication industriel, un paquet de données à transmettre avec à-coup ou sans à-coup ayant, dans au moins un champ de données défini à l'avance, une caractérisation pour un mode de transmission respectif,
- l'unité de traitement de redondance et l'unité de filtrage sont désactivées à la détection d'un paquet de données à transmettre avec à-coup,
- l'unité de traitement de redondance est agencée pour un acheminement sans tampon à l'élément de couplage des paquets de données reçus par les deux unités de réception,
- à la première et/ou à la deuxième unité ( s ) d'émission et de réception est affectée une unité ( 139 ) de mémoire, qui est agencée pour une mise en tampon d'au moins un paquet de données à transmettre sans à-coup pendant une durée donnée à l'avance dans le mode de transmission avec à-coup.

2. Appareil de communication suivant la revendication 1,
dans lequel l'unité de traitement du signal est agencée pour affecter un numéro de séquence à un paquet de données à transmettre avec à-coup et/ou pour insérer une information de redondance dans un paquet de données à transmettre sans à-coup, seulement à la détection d'un paquet de données à transmettre sans à-coup.

3. Appareil de communication suivant l'une des revendications 1 ou 2,
dans lequel l'unité de traitement de redondance est agencée pour un filtrage de duplication, seulement à la détection d'un paquet de données à transmettre sans à-coup.

4. Appareil de communication suivant l'une des revendications 1 à 3,
dans lequel le réseau de communication industriel a une topologie en anneau et dans lequel il est prévu une unité ( 130 ) de contrôle et de commande, qui est agencée pour la détection d'une interruption au sein de la topologie en anneau, au moyen de paquets de données de test envoyés et pour la commande d'un acheminement de paquets de données ayant des données utiles, qui sont dirigés sur un premier raccordement de la première et/ou de la deuxième unité(s) d'émission et de réception, à un deuxième raccordement de la première et/ou de la deuxième unité( s ) d'émission et de réception.

5. Appareil de communication suivant l'une des revendications 1 à 4,
dans lequel on caractérise des paquets de données à transmettre avec à-coup ou sans à-coup par une entrée respective dans un champ de type Ether d'un cadre de données Ethernet.

6. Appareil de communication suivant l'une des revendications 1 à 5,
dans lequel une caractérisation d'un paquet de données à transmettre avec à-coup ou sans à-coup dépend d'un protocole de communication appliqué respectivement à un plan de couche de sécurisation.

7. Appareil de communication suivant l'une des revendications 1 à 6,
dans lequel une priorité plus grande est affectée à des paquets de données à transmettre sans à-coup qu'à des paquets de données à transmettre avec à-coup.

8. Appareil de communication suivant la revendication 7,
dans lequel une étiquette VLAN de priorité 6 correspondant à la norme IEEE 802.1Q est affectée à des paquets de données à transmettre sans à-coup.

9. Appareil de communication suivant l'une des revendications 1 à 8,
dans lequel l'unité de traitement de signal est reliée à l'élément de couplage par une première et par une deuxième interfaces ( 15, 16 ), la première interface étant prévue pour une transmission de paquets de données reçus par la première unité de réception, tandis que la deuxième interface est prévue pour une transmission de paquets de données reçus par la deuxième unité de réception.

10. Appareil de communication suivant l'une des revendications 1 à 9,
dans lequel l'unité de traitement de redondance comprend une unité ( 134 ) de caractérisation, qui est agencée pour l'addition d'une indication de redondance à un paquet de données redondant qui est reçu.

11. Procédé pour faire fonctionner un appareil de communication dans un réseau de communication industriel redondant, dans lequel
- l'appareil ( 1 ) de communication comprend au moins une première et une deuxième unités ( 11, 12 ) d'émission et de réception, qui ont respectivement une interface pour une liaison ( 211, 212 ) du réseau ( 2 ) de communication industriel, les deux unités d'émission et de réception ayant une adresse de réseau identique et un identificateur d'appareil identique,
- à la première et à la deuxième unités d'émission et de réception est reliée une unité ( 13 ) de traitement de signal pour une transmission de données sans à-coup au sein du réseau de communication industriel, qui achemine les paquets de données à envoyer en parallèle aux deux unités d'émission et qui détecte des paquets de données redondants reçus par les unités de réception,
- il est prévu pour un appareil ( 31 à 33 ) d'automatisation au moins un raccordement de réseau relié à l'unité de traitement de signal par un élément ( 14 ) de couplage,
**caractérisé en ce que**
- la première et/ou la deuxième unité( s ) d'émission et de réception transmet au choix avec à-coup ou sans à-coup des paquets de données au sein du réseau de communication industriel et est commutée sélectivement dans un mode de transmission avec à-coup ou sans à-coup, chaque paquet n'étant dupliqué par un appareil de communication émettant que dans le mode de transmission sans à-coup et étant envoyé à un récepteur sur deux voies différentes,
- à la première et/ou à la deuxième unité( s ) d'émission et de réception est reliée une unité ( 138 ) d'exploitation, qui détecte des paquets de données à transmettre avec à-coup ou sans à-coup au sein du réseau de communication industriel, un paquet de données à transmettre avec à-coup ou sans à-coup ayant, dans au moins un champ de données défini à l'avance, une caractérisation pour un mode respectif de transmission, qui est exploitée par l'unité d'exploitation.
- on désactive une unité ( 132 ) de traitement de redondance pour le traitement de paquets de données reçus de deux unités de réception et une unité ( 133 ) de filtrage pour la détection de paquets de données redondants reçus à la détection d'un paquet de données à transmettre avec à-coup,
- l'unité de traitement de redondance achemine à l'élément de couplage, sans mise en tampon, des paquets de données reçus par les deux unités de réception,
- à la première et/ou à la deuxième unité( s ) d'émission et de réception est affectée une unité ( 139 ) de mémoire, qui, dans le mode de transmission avec à-coup, met en tampon, au moins pendant une durée donnée à l'avance, un paquet de données à transmettre avec à-coup.

12. Appareil de communication suivant la revendication 11,
dans lequel, seulement à la détection d'un paquet de données à transmettre sans à-coup, l'unité de traitement du signal affecte un numéro de séquence au paquet de données à transmettre avec à-coup et/ou ajoute une information de redondance au paquet de données à transmettre sans à-coup.

13. Appareil de communication suivant l'une des revendications 11 ou 12,
dans lequel l'unité de traitement de redondance ne filtre des paquets de données redondants reçus qu'à la détection d'une duplication d'un paquet de données à transmettre sans à-coup.

14. Appareil de communication suivant l'une des revendications 11 à 13,
dans lequel le réseau de communication industriel a une topologie en anneau, et dans lequel il est prévu une unité ( 130 ) de contrôle et de commande, qui détecte une interruption au sein de la topologie en anneau au moyen de paquets de données de test envoyés et commande un acheminement de paquets de données ayant des paquets utiles, qui sont dirigés sur un premier raccordement de la première et/ou de la deuxième unité( s ) d'émission et de réception, à un deuxième raccordement de la première et/ou de la deuxième unités( s ) d'émission et de réception.

15. Appareil de communication suivant l'une des revendications 11 à 14,
dans lequel on caractérise des paquets de données à transmettre avec à-coup ou sans à-coup par une entrée respective dans un champ de type Ether d'un cadre de données Ethernet.

16. Appareil de communication suivant l'une des revendications 11 à 15,
dans lequel on caractérise des paquets de données à transmettre avec à-coup ou sans à-coup en fonction d'un protocole de communication à utiliser respectivement sur un plan de couche de sécurisation.

17. Appareil de communication suivant l'une des revendications 11 à 16,
dans lequel une priorité plus grande est affectée à des paquets de données à transmettre sans à-coup qu'à des paquets de données à transmettre avec à-coup.

18. Appareil de communication suivant l'une des revendications 11 à 17,
dans lequel l'unité de traitement de redondance comprend une unité ( 134 ) de caractérisation, qui adjoint respectivement un indicateur de redondance à des paquets de données redondants reçus.
